# EUROPEAN PATENT APPLICATION

(11) **EP 4 603 426 A1**
(43) Date of publication of application: **20.08.2025**
(21) Application number: 23876941.8
(22) Date of filing: 19.05.2023
(51) Int. Cl.: B65G 43/04, B65G 47/86

(54) **CONVEYANCE DEVICE, DETECTION DEVICE, AND PHASE SHIFT DETERMINATION METHOD**

(30) Priority: 12.10.2022 JP 2022163622
(71) Applicant: Mitsubishi Heavy Industries Machinery Systems, Ltd., Kobe-shi, Hyogo 652-8585 (JP)
(72) Inventor: KOBAYASHI, Hiroyuki, Kobe-shi, Hyogo 652-8585 (JP)
(74) Representative: Hoffmann Eitle
(86) International application number: PCT/JP2023/018808
(87) International publication number: WO 2024/079932

(57) **Abstract**

This conveyance device for an article comprises: a rotating electrical machine having a drive shaft; a rotating body that includes a driven shaft connected to the drive shaft and conveys the article; a phase detection unit that detects the phase of periodic rotational motion of the rotating body; and a control unit that controls rotational driving of the rotating electrical machine. The control unit determines the phase shift of the rotating body by comparing first phase information regarding rotational driving acquired from the rotating electrical machine and second phase information regarding rotational motion of the rotating body acquired from the phase detection unit.

## Description

### Technical Field

The present disclosure relates to a device that delivers and receives an article by using a rotating conveyance body.

### Background Art

In many cases, various processes are performed while an article is conveyed along an arc-shaped trajectory by using a circular table rotated by a rotating electrical machine. A rotating conveyance body has an advantage that articles can be continuously conveyed at a high speed in a relatively narrow space. When the articles are processed in the rotating conveyance body, a phase shift of the articles needs to be avoided to properly perform a required process on the articles.

For example, PTL 1 proposes an information writing device which can prevent a shift of an information writing position in a device that writes information on labels continuously conveyed by using the rotating conveyance body. The information writing device disclosed in PTL 1 includes a reflective sensor that detects a dog (target) attached to a rotary table to output a dog light reception signal, and a label delivery detector that outputs a label supply signal when a label magazine is in an operating state. In the information writing device disclosed PTL 1, in a case where the dog light reception signal is input when the label supply signal is input, a printing signal is output to a laser emitter to perform printing.

As another usage of the rotating conveyance body, a beverage filling machine is known. This beverage filling machine includes a loading unit that receives containers of beverages from an upstream side and continuously supplies the containers, a filling unit that receives the supplied containers and fills the containers with the beverages, and an unloading unit that receives the containers filled with the beverages from the filling unit and feeds the containers filled with the beverages toward a downstream side. When the rotating conveyance body is used for each of the loading unit, the filling unit, and the unloading unit, in some cases, an outer periphery of each of the loading unit, the filling unit, and the unloading unit is provided with a plurality of instruments called grippers for gripping the containers. For example, the container held by the loading unit corresponding to the upstream side is delivered to and held by the filling unit corresponding to the downstream side. In a case where a position (phase) is shifted between the instrument of the rotating conveyance body on the upstream side and the instrument of the rotating conveyance body on the downstream side when the container is delivered and received, there is a possibility of an disadvantage as follows. The containers cannot be delivered and received due to interference between the rotating conveyance body on the upstream side and the rotating conveyance body on the downstream side.

### Citation List

### Patent Literature

[PTL 1] Japanese Unexamined Patent Application Publication No. H10-77017

### Summary of Invention

### Technical Problem

As described above, the reason that the phase shift occurs between the rotating conveyance body (loading unit) on the upstream side and the rotating conveyance body (filling unit) on the downstream side is as follows. The phase shift occurs in at least one of the rotating conveyance bodies on the upstream side and the downstream side. For example, the phase shift occurring in at least one of the rotating conveyance bodies on the upstream side and the downstream side includes a case where an actual position of the gripper is shifted from an assumed rotation position and the gripper performs a rotational motion. As a factor of the phase shift, in addition to damage and deterioration of mechanical elements forming the rotating conveyance body, there is a positional shift between the mechanical elements. The disadvantage in delivering and receiving the containers is not limited to the rotating conveyance body including the gripper. For example, the same disadvantage may also occur in the rotating conveyance body which conveys cans as the containers, in which a plurality of semicircular arc-shaped recesses are formed on an outer periphery.

PTL 1 outputs a printing signal Pa to perform printing in a case where a dog light reception signal Pc is input when a label supply signal Pb is input, and this disclosure does not provide any suggestion for the phase shift caused by damage or deterioration of the mechanical elements forming the rotating conveyance body.

For the above-described reasons, an object of the present disclosure is to provide a conveyance device accompanied with a rotating body which can detect a phase shift caused by an increase in a mechanical load or damage or deterioration of mechanical elements, for example.

### Solution to Problem

According to the present disclosure, a conveyance device for an article includes a rotating electrical machine having a drive shaft, a rotating body that includes a driven shaft connected to the drive shaft and conveys an article, a phase detection unit that detects a phase of periodic rotational motion of the rotating body, and a control unit that controls rotational driving of the rotating electrical machine. The control unit determines a phase shift of the rotating body by comparing first phase information on the rotational driving acquired from the rotating electrical machine with second phase information on the rotational motion of the rotating body which is acquired from the phase detection unit.

The present disclosure proposes a detection device that detects a phase shift of a rotating body including a driven shaft connected to a drive shaft of a rotating electrical machine and conveying an article. This detection device includes a phase detection unit that detects a phase of a periodic rotational motion of the rotating body, and a control unit that controls rotational driving of the rotating electrical machine. The control unit determines a phase shift of the rotating body by comparing first phase information on the rotational driving acquired from the rotating electrical machine with second phase information on the rotational motion of the rotating body which is acquired from the phase detection unit.

The present disclosure provides a phase shift determination method including a first step of acquiring first phase information on a rotational motion of a rotating electrical machine from the rotating electrical machine having a drive shaft, a second step of acquiring second phase information on a rotational motion of a rotating body including a driven shaft connected to the drive shaft and conveying an article, and determining a phase shift of the rotating body by comparing the first phase information with the second phase information.

### Advantageous Effects of Invention

According to the present disclosure, the phase shift of the driven shaft can be determined by comparing the first phase information on the rotational motion acquired from the rotating electrical machine with the second phase information on the rotational motion of the rotating body which is acquired from the phase detection unit.

### Brief Description of Drawings

Fig. 1 is a diagram schematically illustrating a beverage manufacturing line according to an embodiment.
Fig. 2 is a plan view schematically illustrating a filling machine forming the beverage manufacturing line.
Fig. 3 is a simplified side view illustrating a rotating conveyance device applied to the filling machine in Fig. 2.
Fig. 4 is a plan view illustrating a detection body used for the rotating conveyance device in Fig. 3.
Fig. 5 is a graph illustrating a sensor signal and an encoder signal at a constant speed.
Fig. 6 is a graph illustrating the sensor signal and the encoder signal during acceleration.
Fig. 7 is a graph illustrating the sensor signal and the encoder signal during deceleration.
Fig. 8 is a flowchart illustrating a procedure for detecting a phase shift in the rotating conveyance device in Fig. 4.
Fig. 9 is a plan view illustrating an example of a rotating conveyance body used to deliver and receive a can container.

### Description of Embodiments

Hereinafter, an embodiment will be described with reference to the accompanying drawings.

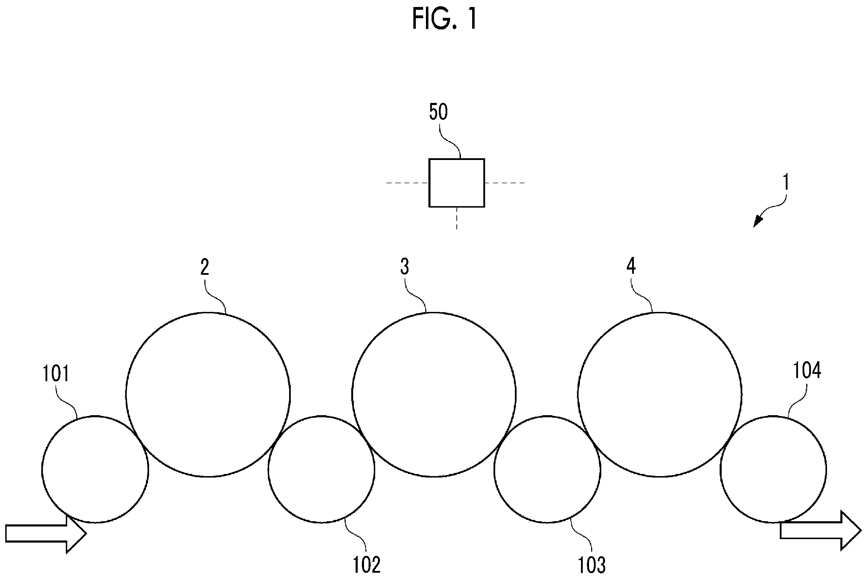

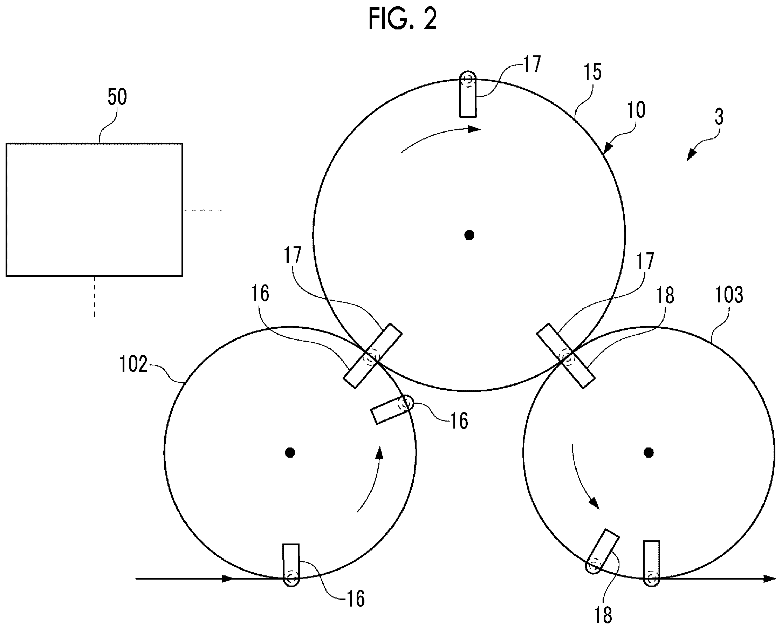

### [Overall Configuration of Beverage Manufacturing Line 1: Refer to Figs. 1 and 2]

The present embodiment relates to a beverage manufacturing line 1 for obtaining a beverage product by filling a resin-made container with the beverage product, and includes a rinser 2 that rinses the container, a filling machine 3 that fills the inside of the container with a beverage serving as a content, and a capper 4 that attaches a lid to the container filled with the beverage. The rinser 2, the filling machine 3, and the capper 4 each include a rotary-type conveyance device. The beverage manufacturing line 1 is disposed inside a chamber (not illustrated). The inside of the chamber is maintained at a positive pressure with respect to an external atmospheric pressure. In this manner, dust infiltration or the like is prevented. The filling is performed, and the lid is attached in an aseptic state inside the chamber.

In addition to the rinser 2, the filling machine 3, and the capper 4, the beverage manufacturing line 1 includes star wheels 101 to 104 which are a plurality of rotating conveyance bodies forming the rotary-type conveyance device. In Fig. 1, a direction in which the container is conveyed is indicated by a white arrow.

The beverage manufacturing line 1 performs rinsing and sterilization with the rinser 2, filling with the filling machine 3, and lid attachment with the capper 4 while conveying the containers supplied from a container supply source (not illustrated), and dispenses the containers toward a subsequent step such as packing. Specifically, the container (not illustrated) supplied from the container supply source is delivered from the star wheel 101 to the rinser 2, the container rinsed by the rinser 2 is delivered to the star wheel 102, and the container is delivered to the filling machine 3 located on the downstream side. The container filled with the beverage by the filling machine 3 is delivered to the star wheel 103 located on the downstream side and is delivered to the capper 4 located on a downstream side. The container to which the lid is attached by the capper 4 is delivered to the star wheel 104 located on the downstream side, and is further delivered to a device on the downstream side. Here, for example, when a phase shift occurs in the rotary-type conveyance device in the filling machine 3, there is a possibility that the container cannot be delivered to and received from the star wheel 102. Therefore, in the present embodiment, as an example, a method for effectively detecting and determining the phase shift of the filling machine 3 will be described. A phase refers to a certain specific aspect in one cycle of a repeated phenomenon.

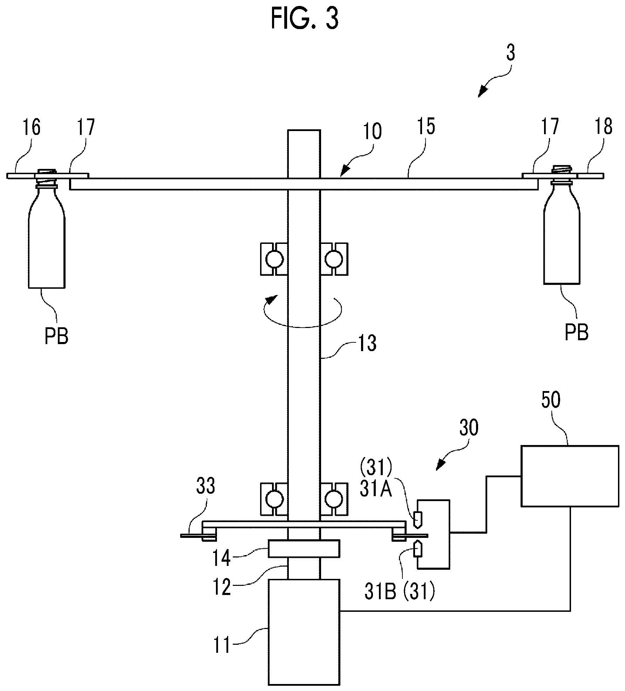

### [Configuration of Filling Machine 3: Refer to Figs. 2 and 3]

The filling machine 3 can fill the container with any of a beverage made of a single type of a liquid material, a beverage made of two types of liquid materials, and a beverage containing solid matter such as pulp in the liquid material. As illustrated in Figs. 2 and 3, the filling machine 3 includes a rotating conveyance unit 10, a phase detection unit 30 that detects a phase shift in a rotation direction of the rotating conveyance unit 10, and a control unit 50 that determines a phase shift in addition to controlling an operation of each portion of the filling machine 3. In addition, the filling machine 3 includes the star wheel 102 that delivers the container from the rinser 2 (Fig. 1) to the rotating conveyance unit 10, and the star wheel 103 that receives the container PB from the rotating conveyance unit 10 and delivers the container PB to the capper 4 (Fig. 1). Fig. 2 illustrates only some of the gripper 17. The control unit 50 may be a part of a control device that controls the whole beverage manufacturing line 1. The gripper 17 corresponds to an example of a holding element of the article in the present disclosure.

As illustrated in Fig. 3, the rotating conveyance unit 10 includes a rotating electrical machine 11 serving as a driving source, a driven shaft 13 connected to the drive shaft 12 of the rotating electrical machine 11, a star wheel 15 serving as a rotating body fixed to the driven shaft 13, and a plurality of grippers 17 provided on an outer peripheral edge of the star wheel 15. Although not illustrated, the plurality of grippers 17 are provided at an equal interval in a circumferential direction of the star wheel 15. The rotating conveyance unit 10 rotates the star wheel 15 by rotationally driving the rotating electrical machine 11. As the star wheel 15 rotates, a container PB is received by the gripper 17 from the gripper 16 of the star wheel 102 on the upstream side, and the container PB gripped by the gripper 17 is filled with the beverage from the filling device (not illustrated).

The container PB filled with the beverage is delivered to the gripper 18 of the star wheel 103. The rotating conveyance unit 10 monitors a phase shift for each of the plurality of grippers 17 provided in the star wheel 15 so that the gripper 17 can reliably receive the container PB from the gripper 16 and the container PB can be reliably delivered from the gripper 17 to the gripper 18 of the container PB.

As an example, the rotating electrical machine 11 includes a servomotor, particularly an AC (alternating current) servomotor, and the servomotor is provided with a rotary encoder (hereinafter, simply referred to as an encoder). The rotating electrical machine 11 is rotationally driven to be accelerated and decelerated in accordance with an instruction from the control unit 50. The rotating electrical machine 11 measures a rotation speed, a rotation angle, and a rotation position of the servomotor with the encoder, and measurement information thereof is transmitted to the control unit 50. As the encoder, an incremental encoder and an absolute encoder are known, and any of the encoders can be applied to the rotating electrical machine 11. Here, the incremental encoder outputs a pulse having a frequency proportional to the rotation speed of the servomotor as the measurement information. In addition, the absolute encoder outputs an absolute value of the rotation angle of the servomotor as the measurement information. The measurement information relating to the servomotor which is output from the rotating electrical machine 11 is transmitted to the control unit 50, and is used in the control unit 50 to determine the phase shift for each of the plurality of grippers 17. Since information output from the encoder is absolute information that does not include the phase shift, the information serves as reference information for determining the phase shift of the gripper 17.

The drive shaft 12 and the driven shaft 13 of the rotating electrical machine 11 are connected by a shaft coupling 14. Although not illustrated, a speed reducer may be provided between the drive shaft 12 and the driven shaft 13. The driven shaft 13 fixing and supporting the star wheel 15 is connected via the shaft coupling 14, but ideally, the driven shaft 13 is rotated in synchronization with the rotation of the drive shaft 12. However, when a load applied to the star wheel 15 including the gripper 17 increases, for example, due to a positional shift between the drive shaft 12 and the driven shaft 13 which are connected by the shaft coupling 14, there is a possibility that an actual phase of the gripper 17 is shifted from a planned phase. The phase referred to herein indicates a position of the gripper 17 in the rotation direction in association with the rotation of the star wheel 15.

The gripper 17 includes a pair of gripping pieces, the gripper 17 corresponds to a follower joint of a cam, and a mechanism corresponding to a driver joint of the cam is provided around the star wheel 15. The container PB is gripped or released through opening and closing of the pair of the gripping pieces by causing the gripper 17 to interfere with a mechanism corresponding to the driver joint. Since the interference between the gripper 17 and the mechanism corresponding to the driver joint is accompanied by a considerable load, there is a possibility that the phase of the gripper 17 is shifted due to the load. In order to reduce the load of opening and closing the gripper 17, a lubricant, particularly lubrication water, can be applied to the cam mechanism. However, water lubrication cannot be applied to a usage in which filling of a product liquid is required in a dry atmosphere avoiding moisture. In addition, in order to avoid a temperature drop, the water lubrication cannot be applied to a usage in which a sterilization treatment for holding a predetermined temperature is required. Therefore, in the filling of the product liquid in the dry atmosphere, there is a high possibility that the phase shift occurs in the gripper 17. Therefore, the filling machine 3 of the beverage manufacturing line 1 includes a phase detection unit 30 for monitoring the phase shift of the gripper 17.

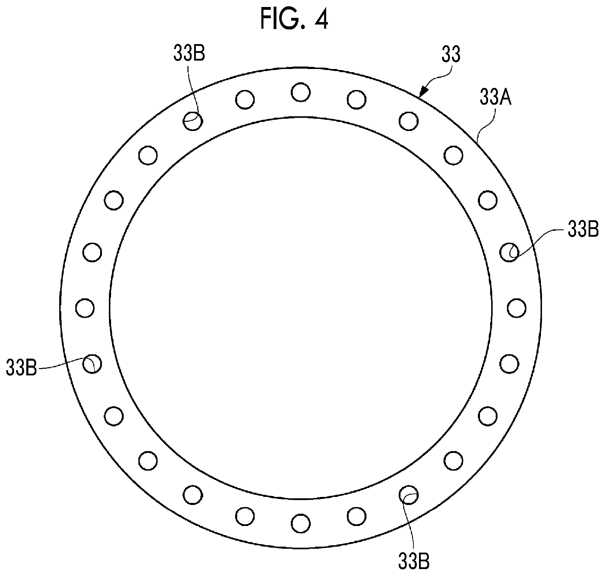

### [Phase Detection Unit 30: Refer to Figs. 3 and 4]

The phase detection unit 30 outputs phase information corresponding to each of the plurality of grippers 17 attached to the star wheel 15. The output phase information is compared with phase information on the rotation angle of the servomotor, which is output from the encoder forming the rotating electrical machine 11. The phase shift of the gripper 17 is determined, based on a result of the comparison. The phase shift is determined by the control unit 50.

As illustrated in Fig. 3, the phase detection unit 30 includes a photoelectric sensor 31 and a detection body 33 through which inspection light emitted from the photoelectric sensor 31 is blocked or allowed to pass.

Here, as an example, a transmissive photoelectric sensor 31 is used, and the phase detection unit 30 includes a light projector 31A that emits inspection light serving as an example of an inspection signal, and a light receiver 31B that receives the inspection light emitted from the light projector 31A and outputs a light reception signal. The reception signal output from the light receiver 31B is transmitted to the control unit 50, and is used for detecting the phase shift of the plurality of grippers 17 supported by the star wheel 15. The light projector 31A and the light receiver 31B interpose the detection body 33 therebetween, and disposed at positions where the inspection light emitted from the light projector 31A can be detected by the light receiver 31B. The light projector 31A is an example of a transmitter of the present disclosure, and the light receiver 31B is an example of a receiver of the present disclosure.

As illustrated in Fig. 4, the detection body 33 includes an annular shielding plate 33A and a plurality of light paths 33B provided at an equal interval in the circumferential direction of the shielding plate 33A around the driven shaft 13 and penetrating the front and back sides of the shielding plate 33A. The detection body 33 is rotated in synchronization with the rotation of the star wheel 15 by the rotating electrical machine 11. In a process of the operation of the detection body 33, when the inspection light from the light projector 31A is emitted to the shielding plate 33A, the light receiver 31B cannot receive the inspection light. Therefore, the reception signal is not output. When the inspection light from the light projector 31A transmits through the light path 33B, the light receiver 31B outputs a light reception signal. In this way, when the detection body 33 continues a rotation operation and continues to emit the inspection light from the light projector 31A, the light reception signals corresponding to the inspection light sequentially transmitted through the plurality of light paths 33B are intermittently output toward the control unit 50 from the light receiver 31B. As will be described in detail later, the control unit 50 detects the phase shift of the gripper 17 by comparing the light reception signal acquired from the light receiver 31B with a rotation angle signal acquired from the encoder included in the rotating electrical machine 11. The light path 33B is an example of a detection element of the present disclosure. In addition, the light reception signal is an example of second phase information of the present disclosure, and the rotation angle signal is an example of first phase information of the present disclosure.

The plurality of light paths 33B in the detection body 33 are provided corresponding to the number and an interval of the plurality of grippers 17 provided on an outer peripheral edge of the star wheel 15. As a preferable example, 24 light paths 33B are formed in the detection body 33, and the light paths 33B correspond to the 24 grippers 17 provided in the star wheel 15. Therefore, when the phase shift occurs in the light path 33B, it can be determined that the phase shift also occurs in the corresponding gripper 17. However, when only the light reception signal acquired from the light receiver 31B is monitored, the phase shift of the light path 33B, that is, the phase shift of the gripper 17 cannot be detected. Therefore, the control unit 50 monitors the phase shift of the gripper 17 by comparing the rotation angle signal acquired from the encoder with the light reception signal.

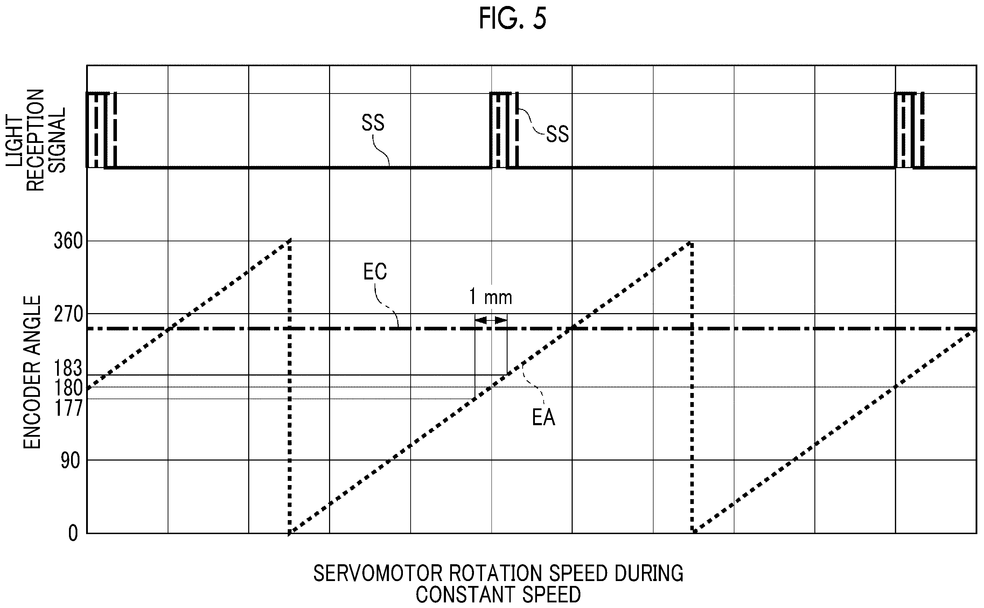

### [Control Unit 50: Refer to Figs. 5, 6, 7, and 8]

A constant-speed time when the servomotor forming the rotating electrical machine 11 rotates at a constant speed will be described with reference to Fig. 5. In Fig. 5, a solid line indicates a light reception signal SS from the light receiver 31B, a short dashed line indicates an encoder angle EA, and a one-dot chain line indicates a motor current value EC of the servomotor. Fig. 5 illustrates that the servo motor is driven at a constant speed. Therefore, the motor current value EC is constant. Here, the encoder angle EA is an example of the first phase information of the present disclosure, and the light reception signal SS is an example of the second phase information of the present disclosure.

In Fig. 5, when the encoder angle EA and the light reception signal SS are compared with each other, the light reception signal SS rises at 180° in a process in which the encoder angle EA is in an increasing tendency. This case indicates that the phase of the encoder angle EA coincides with the phase of the light reception signal SS, and the control unit 50 determines that the phase shift does not occur in the gripper 17. In Fig. 5, an example of the light reception signal SS in which the phase shift occurs is indicated by a long broken line, but the encoder angle EA is shifted from 180° and the light reception signal SS rises. In this case, the control unit 50 determines that the phase shift occurs in the gripper 17. As described above, even when a large load is applied to the star wheel 15 via the gripper 17, the encoder angle EA is stably output without being affected by the load. Therefore, when the encoder angle EA and the light reception signal SS are compared with each other, the phase shift of the gripper 17 can be detected and determined via the phase shift of the light reception signal SS.

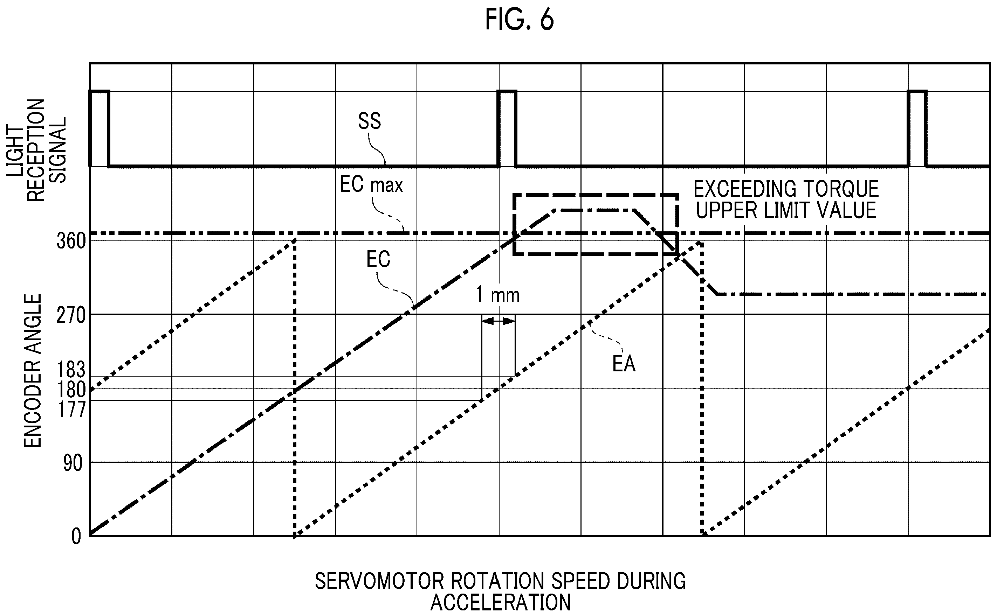

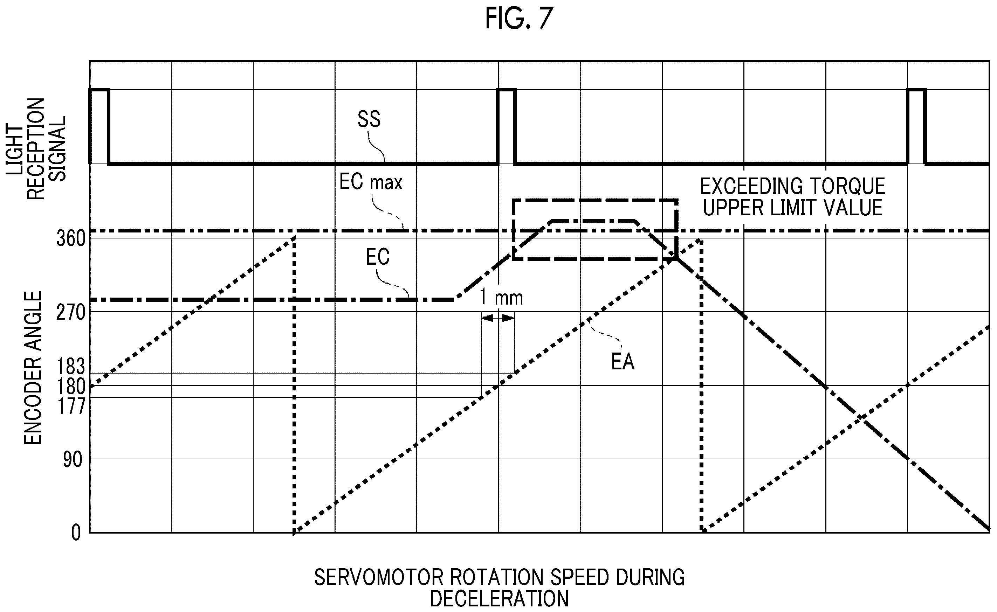

Next, determination of the phase shift in the control unit 50 during acceleration and deceleration of the rotating electrical machine 11 will be described with reference to Figs. 6 and 7.

During acceleration and deceleration, in addition to comparing the light reception signal SS with the encoder angle EA, the motor current value EC is used to predict the phase shift. That is, the motor current value EC greatly fluctuates during the acceleration and the deceleration of the rotating electrical machine 11, and the phase shift is likely to occur. Therefore, an upper limit value ECmax is set for the motor current value EC, and when the measured motor current value EC reaches the upper limit value ECmax, it is determined that the phase shift occurs on the driven shaft 13 side.

For example, although Fig. 6 illustrates a case where the rotating electrical machine 11 is accelerated, the motor current value EC continuously increases in proportion to the acceleration. In some cases, when the motor current value EC exceeds the upper limit value ECmax, the control unit 50 determines that the phase shift occurs. Fig. 6 illustrates that the motor current value EC decreases to proceed to a constant speed operation after the motor current value EC exceeds the upper limit value ECmax. However, the control unit 50 can determine that the phase shift occurs when the motor current value EC exceeds the upper limit value ECmax, and can instruct the subsequent process.

Fig. 7 illustrates an example in which the rotating electrical machine 11 is decelerated from a state of the constant speed operation. When the rotating electrical machine 11 performs a deceleration operation, the motor current value EC, which is a constant value, may rise and exceed the upper limit value ECmax before the motor current value EC continuously decreases. The control unit 50 can determine that the phase shift occurs when the motor current value EC exceeds the upper limit value ECmax, and can instruct the subsequent process.

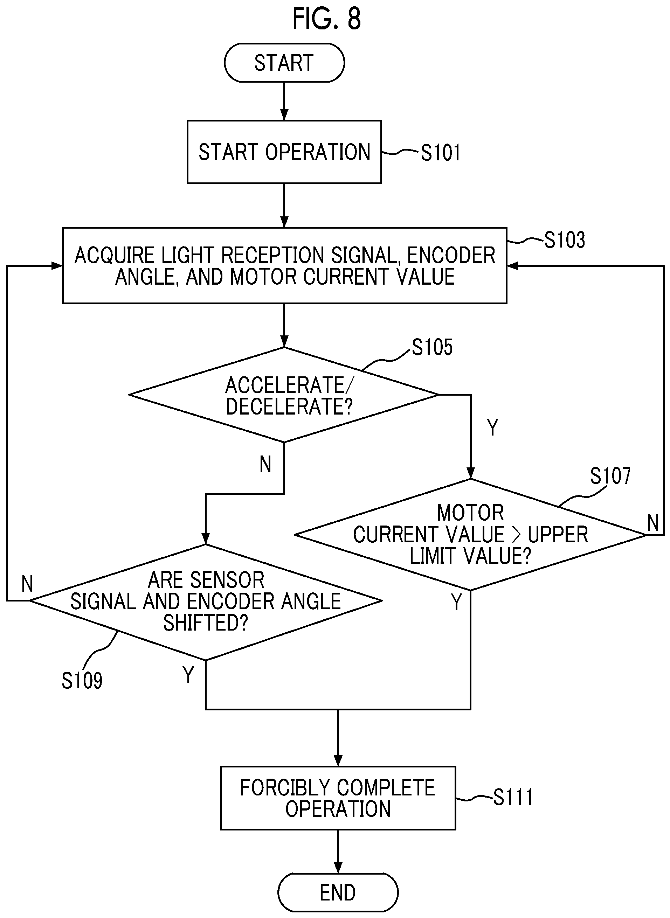

Next, an example of a procedure of determining the phase shift and a process after the determination of the phase shift by the control unit 50 will be described with reference to Fig. 8.

Based on an instruction from the control unit 50, the rotating electrical machine 11 starts the operation, and the light projector 31A continuously emits the inspection light in the phase detection unit 30 (Fig. 8 S101). In this case, the control unit 50 continuously acquires the light reception signal SS from the phase detection unit 30, and continuously acquires information on the encoder angle EA and the motor current value EC of the servomotor from the encoder of the rotating electrical machine 11 (S103). In this way, the phase shift in the driven shaft 13 can be determined. The control unit 50 stores information on the upper limit value ECmax of the motor current value EC.

The control unit 50 determines whether the rotating electrical machine 11 is accelerated or decelerated (S105). When the rotating electrical machine 11 is accelerated or decelerated (S105 Y), the control unit 50 determines a magnitude relationship between the stored upper limit value ECmax and the continuously acquired motor current value EC (S107). When the motor current value EC is greater than the upper limit value, the control unit 50 determines that the phase shift occurs in the driven shaft 13 (S107 Y). In this case, the control unit 50 issues an instruction to forcibly complete the operation of the rotating electrical machine 11 (S111).

When the control unit 50 determines that the rotating electrical machine 11 performs the constant speed operation instead of the acceleration or the deceleration (S105 N), the control unit 50 compares the encoder angle EA with the light reception signal SS to determine the shift of the light reception signal SS (S109). When the control unit 50 determines that the light reception signal SS is shifted from the encoder angle EA as a result of the comparison between the encoder angle EA and the light reception signal SS, the control unit 50 determines that the phase shift occurs in the driven shaft 13 (S109 Y). In this case, the control unit 50 issues an instruction to forcibly complete the operation of the rotating electrical machine 11 (S 111).

When it is determined that the phase shift does not occur in the driven shaft 13 (S107 N, S109 N), the control unit 50 repeats the procedure described above.

### [Advantageous Effects of Beverage Manufacturing Line 1]

As described above, according to the beverage manufacturing line 1, the encoder angle EA which is one of operation information of the rotating electrical machine 11 is compared with the light reception signal SS which is operation information of the driven shaft 13. Whereas the encoder angle EA does not include the shift, the light reception signal SS includes the shift. Therefore, when the encoder angle EA and the light reception signal SS are compared with each other, it is possible to detect and determine whether or not the phase shift occurs in the gripper 17 via the shift of the light reception signal SS. When the control unit 50 can detect that the phase shift occurs in the gripper 17, the control unit 50 can avoid the interference between the gripper 17 and the gripper 16 on the upstream side and the interference between the gripper 17 and the gripper 18 on the downstream side by forcibly stopping the operation of the rotating electrical machine 11.

According to the beverage manufacturing line 1, it is possible to predict the occurrence of the phase shift of the gripper 17 by using the motor current value EC when the rotating electrical machine 11 is accelerated and decelerated. Therefore, according to the beverage manufacturing line 1, even when a load applied to the driven shaft 13 increases, the phase shift of the gripper 17 can be prevented in advance.

According to the beverage manufacturing line 1, as a preferred form, the light path 33B serving as the detection element is provided corresponding to each of the plurality of grippers 17. Therefore, the phase shift caused by an excessive load applied to any of the grippers 17 due to the operation as the cam can be quickly identified. Therefore, a delay in completing a subsequent forced operation can be minimized.

Hitherto, the preferred embodiments of the present disclosure have been described. Meanwhile, it is possible to select and adopt the configurations described in the embodiments or to appropriately change the configurations to other configurations.

For example, hitherto, the filling machine 3 has been described. Meanwhile, the phase shift detection method of the present disclosure is applied to the rinser 2 and the capper 4 including the star wheel provided with the gripper.

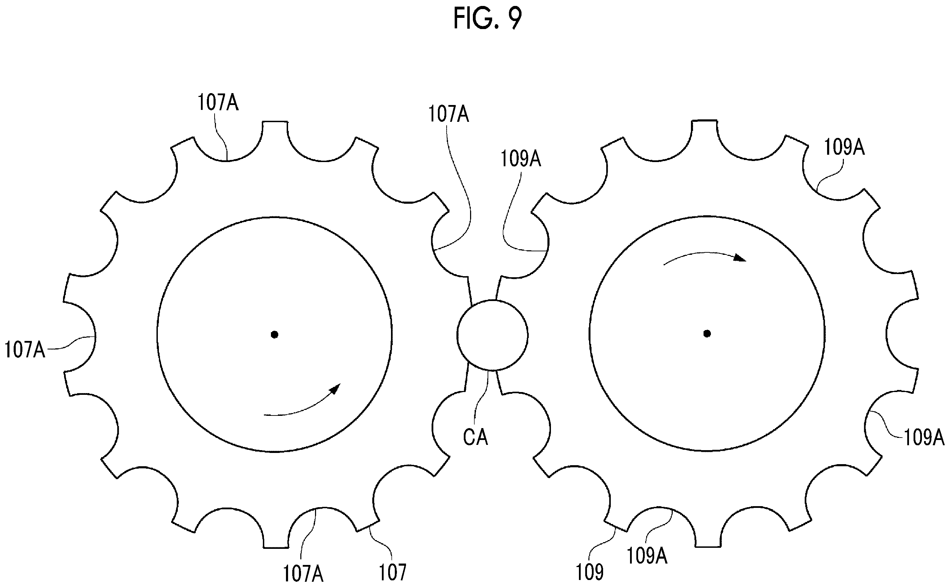

In addition, hitherto, an example has been described in which the star wheel includes the gripper to mainly avoid the interference of the gripper. Meanwhile, the phase shift detection method of the present disclosure is also applicable to the star wheel that does not include the gripper. An example of the star wheel is illustrated in Fig. 9, and the star wheels 107 and 109 applied to delivering and receiving a can container CA correspond to the example. The outer peripheral edges of the star wheels 107 and 109 are provided with a plurality of pockets 107A and 109A recessed inward in the radial direction in which the can container CA is accommodated. The can container CA is conveyed in a state where approximately half of the can container CA in the circumferential direction is accommodated in the pockets 107A and 109A. The present disclosure is also applied to the star wheels 107 and 109. Accordingly, it is possible to detect and determine the phase shift which may occur in the driven shaft and the star wheels 107 and 109 fixed to the driven shaft. The pockets 107A and 109A correspond to an example of a holding element of the article in the present disclosure.

In the present embodiment, the phase detection unit 30 uses the transmissive photoelectric sensor 31, but the present disclosure may use a reflective photoelectric sensor or a retroreflective photoelectric sensor.

In addition, the photoelectric sensor 31 is merely an example of a sensor that can detect a periodically visiting portion in the detection body 33 in a rotating body motion, and a sensor that can perform the same detection is applied. For example, a proximity sensor, a fiber sensor, an ultrasonic wave sensor, a photo-micro sensor, or the like can be used as a substitute for the photoelectric sensor. As the detection element for various these sensors, in addition to the detection element having the light path 33B as in the detection body 33, for example, in a case of the proximity sensor, a disk-shaped member in which irregularities are alternately formed in the circumferential direction may be used, and a protrusion portion serving as the detection element may be detected by the proximity sensor. Other sensors may have a form of the detection element, depending on characteristics of the sensors.

As a preferable form, the detection body 33 of the present embodiment includes the light path 33B corresponding to each of the plurality of grippers 17. However, the present disclosure is not limited thereto. Even when only one light path 33B is provided as the detection element, the phase shift detection method of the present disclosure can function. However, as the number of the light paths 33B increases, a time interval at which the phase shift can be detected is shortened. For example, when only one light path 33B is provided, the detection body 33 needs to rotate once to detect the phase shift. In contrast, as long as two light paths 33B are provided, the detection body 33 may rotate 0.5 times to detect the phase shift. Therefore, in order to quickly detect the phase shift, it is desirable to increase the number of the light paths 33B, and the number of the light paths 33B exceeding the number of the grippers 17 can also be provided.

The phase detection unit 30 of the present embodiment is provided at a position away from the star wheel 15, but this configuration is also merely an example of the present disclosure. The phase detection unit 30 can be provided at any position where the phase shift of the star wheel 15 can be detected, such as a position close to the star wheel 15. In addition, although the phase detection unit 30 includes the detection body 33, for example, the star wheel 15 can have a function of the detection body 33. Therefore, the independent detection body 33 can be omitted in the present disclosure.

### [Additional Notes]

### <Additional Note 1>

The conveyance device for the article according to the present disclosure includes the rotating electrical machine (11) having the drive shaft (12), the rotating body (15) including the driven shaft (13) connected to the drive shaft (12) and conveying the article, the phase detection unit (30) that detects the phase of the periodic rotational motion of the rotating body (15), and the control unit (50) that controls the rotational driving of the rotating electrical machine (11).

The control unit (50) determines the phase shift of the rotating body (15) by comparing the first phase information (EA) on the rotational driving acquired from the rotating electrical machine (11) with the second phase information (SS) on the rotational motion of the rotating body which is acquired from the phase detection unit (30).

### <Additional Note 2>

Preferably, the phase detection unit (30) includes the detection body (33) fixed to the driven shaft (13) and having the detection element (33B), and the sensor (31) that detects the detection element (33B) of the detection body (33).

Since the phase shift of the rotating body (15) is reflected in the driven shaft (13), when the phase detection unit (30) is provided for the driven shaft (13).the phase shift of the rotating body (15) can be detected and determined.

### <Additional Note 3>

In Additional Note 1 or Additional Note 2, preferably, the detection body (33) includes the plurality of detection elements (33B) disposed on the circumference formed around the driven shaft (13).

Even when the detection element (33B) is a single element, the phase shift can be detected. However, when the plurality of detection elements (33B) are provided, the phase shift can be quickly detected corresponding to the number of the detection elements (33B).

### <Additional Note 4>

In any one of Additional Notes 1 to 3, preferably, the rotating body (15) includes the plurality of holding elements (17, 107A, and 109A) for the articles (PB and CA), which are disposed on the circumference formed around the driven shaft (13), and the detection elements (33B) are provided corresponding to the number and the interval of the holding elements (17, 107A, and 109A).

When the detection elements (33B) are provided at an interval and the number corresponding to the holding elements (17, 107A, and 109A), the phase shift can be detected for each of the holding elements (17, 107A, and 109A). In this manner, it is possible to more quickly and accurately prevent the interference of the holding elements (17, 107A, and 109A).

### <Additional Note 5>

In any one of Additional Notes 1 to 4, preferably, the rotating body (15) includes the plurality of holding elements (17, 107A, and 109A) for the articles (PB and CA), which are disposed on the circumference formed around the driven shaft (13), and the plurality of detection elements (33B) are provided to exceed the number of the holding elements (17, 107A, and 109A).

When the plurality of detection elements (33B) are provided to exceed the number of the holding elements (17, 107A, and 109A), the phase shift of the holding elements (17, 107A, and 109A) can be more quickly detected and determined.

### <Additional Note 6>

In any of Additional Notes 1 to 5, preferably, the detection element (33B) is the signal path (33B) penetrating the front and back sides of the detection body (33), and the sensor (31) includes the transmitter (31A) of the inspection signal and the receiver (31B) of the inspection signal passing through the signal path (33B).

The signal path (33B) penetrating the front and back sides of the detection body (33) can be easily formed by punching the detection body (33).

### <Additional Note 7>

In any one of Additional Notes 1 to 6, preferably, the control unit (50) determines the phase shift of the rotating body (15) by comparing the current value (EC) of the rotating electrical machine (11) with the predetermined upper limit value (ECmax) while the rotating electrical machine (11) performs the acceleration operation or the deceleration operation.

Since the phase shift of the rotating body (15) is determined based on the current value (EC) of the rotating electrical machine (11), it is possible to prevent the interference of the holding elements (17, 107A, and 109A) and a delivery defect of the article in advance while the acceleration operation or the deceleration operation is performed.

### <Additional Note 8>

In any one of Additional Notes 1 to 7, preferably, when the control unit (50) determines the phase shift of the rotating body (15), the control unit (50) completes the rotational driving of the rotating electrical machine (11). In this way, it is possible to prevent the interference of the holding elements (17, 107A, and 109A) and the delivery defect of the article.

### <Additional Note 9>

According to the present disclosure, the device that detects the phase shift of the rotating body (15) including the driven shaft (13) connected to the drive shaft (12) of the rotating electrical machine (11) and conveying the article includes the phase detection unit (30) that detects the phase of the periodic rotational motion of the rotating body (15), and the control unit (50) that controls the rotational driving of the rotating electrical machine (11). The control unit (50) determines the phase shift of the rotating body (15) by comparing the first phase information on the rotational driving acquired from the rotating electrical machine (11) with the second phase information on the rotational motion of the rotating body (15) which is acquired from the phase detection unit (30).

### <Additional Note 10>

According to the present disclosure, the phase shift determination method includes a first step of acquiring the first phase information (EA) on the rotational motion of the rotating electrical machine (11) from the rotating electrical machine (11) having the drive shaft (12), a second step of acquiring the second phase information (SS) on the rotational motion of the rotating body (15) including the driven shaft (13) connected to the drive shaft (12) and conveying the article, and a third step of determining the phase shift of the rotating body (15) by comparing the first phase information (EA) with the second phase information (SS).

### <Additional Note 11>

In Additional Note 9, preferably, the article is the container to be filled with the beverage.

### Reference Signs List

1: beverage manufacturing line
2: rinser
3: filling machine
4: capper
10: rotating conveyance unit
11: rotating electrical machine
12: drive shaft
13: driven shaft
14: shaft coupling
15: star wheel
16, 17, 18: gripper
30: phase detection unit
31: photoelectric sensor
31A: light projector
31B: light receiver
33: detection body
33A: shielding plate
33B: light path
50: control unit
101, 102, 103, 104, 107, 109: star wheel
SS: light reception signal
EA: encoder angle
EC: current value
Ecmax: upper limit value
PB: container
CA: can container

## Claims

1. A conveyance device for an article, comprising:
a rotating electrical machine having a drive shaft;
a rotating body that includes a driven shaft connected to the drive shaft and conveys an article;
a phase detection unit that detects a phase of periodic rotational motion of the rotating body; and
a control unit that controls rotational driving of the rotating electrical machine,
wherein the control unit determines a phase shift of the rotating body by comparing first phase information on the rotational driving acquired from the rotating electrical machine with second phase information on the rotational motion of the rotating body which is acquired from the phase detection unit.

2. The conveyance device according to Claim 1,
wherein the phase detection unit includes a detection body fixed to the driven shaft and having a detection element, and a sensor that detects the detection element of the detection body.

3. The conveyance device according to Claim 2,
wherein the detection body includes a plurality of the detection elements disposed on a circumference formed around the driven shaft.

4. The conveyance device according to Claim 3,
wherein the rotating body includes a plurality of holding element of the articles, which are disposed on the circumference formed around the driven shaft, and the detection elements are provided corresponding to the number and an interval of the holding elements.

5. The conveyance device according to Claim 3,
wherein the rotating body includes a plurality of holding elements of the articles, which are disposed on the circumference formed around the driven shaft, and the plurality of detection elements are provided to exceed the number of the holding elements.

6. The conveyance device according to Claim 2,
wherein the detection element is a signal path that penetrates front and back sides of the detection body, and the sensor includes a transmitter of an inspection signal, and a receiver of the inspection signal passing through the signal path.

7. The conveyance device according to Claim 1,
wherein the control unit determines the phase shift of the rotating body by comparing a current value of the rotating electrical machine with a predetermined upper limit value while the rotating electrical machine is in an acceleration operation or a deceleration operation.

8. The conveyance device according to Claim 1 or 7,
wherein when the control unit determines the phase shift of the rotating body, the control unit completes the rotational driving of the rotating electrical machine.

9. A detection device that detects a phase shift of a rotating body including a driven shaft connected to a drive shaft of a rotating electrical machine and conveying an article, the detection device comprising:
a phase detection unit that detects a phase of a periodic rotational motion of the rotating body; and
a control unit that controls rotational driving of the rotating electrical machine,
wherein the control unit determines a phase shift of the rotating body by comparing first phase information on the rotational driving acquired from the rotating electrical machine with second phase information on the rotational motion of the rotating body which is acquired from the phase detection unit.

10. A phase shift determination method comprising:
a first step of acquiring first phase information on a rotational motion of a rotating electrical machine from the rotating electrical machine having a drive shaft;
a second step of acquiring second phase information on a rotational motion of a rotating body including a driven shaft connected to the drive shaft and conveying an article; and
determining a phase shift of the rotating body by comparing the first phase information with the second phase information.

11. The phase shift determination method according to Claim 10,
wherein the article is a container to be filled with a beverage.
